# EUROPÄISCHE PATENTSCHRIFT

(11) **EP 3 838 825 B1**
(45) Veröffentlichungstag und Bekanntmachung des Hinweises auf die Patenterteilung: **25.01.2023**
(21) Anmeldenummer: 19219108.8
(22) Anmeldetag: 20.12.2019
(51) Int. Cl.: B66B 1/34

(54) **DEHNUNGSSENSOR FÜR EIN POSITIONSMESSBAND EINES AUFZUGES**
EXTENSION SENSOR FOR A POSITION MEASURING BELT OF AN ELEVATOR
CAPTEUR D'EXPANSION POUR UNE BANDE DE MESURE DE POSITION D'UN ASCENSEUR

(43) Veröffentlichungstag der Anmeldung: 23.06.2021
(73) Patentinhaber: Cedes AG, 7302 Landquart (CH)
(72) Erfinder: Hardegger, Martin, 7320 Sargans (CH); Hagen, Stefan, 7208 Malans (CH)
(74) Vertreter: Otten, Roth, Dobler & Partner mbB Patentanwälte

(56) Entgegenhaltungen:
- CN-A- 108 249 245
- US-A- 4 427 095

## Beschreibung

Die Erfindung betrifft eine Sensorvorrichtung für einen Aufzug mit einem hängenden Positionsmessband zur Detektion einer kritischen Längenänderung des Positionsmessbandes.

Aus dem Stand der Technik sind z.B. aus der CN 108 249 245 A Sensorvorrichtungen bekannt, die den Abriss eines Positionsmessbandes detektieren.

Es ist Aufgabe der Erfindung, eine verbesserte Sensorvorrichtung bereit zu stellen.

Diese Aufgabe wird, ausgehend von einer Sensorvorrichtung der eingangs genannten Art, durch eine Sensorvorrichtung nach Anspruch 1 und einen Aufzug nach Anspruch 13 gelöst. Vorteilhafte Ausgestaltungen sind in den weiteren abhängigen Ansprüchen angegeben.

Die erfindungsgemäße Sensorvorrichtung ist eine Sensorvorrichtung für einen Aufzug mit einem hängenden Positionsmessband zur Detektion einer kritischen Längenänderung des Positionsmessbandes mit einem Träger mit einem Montageelement zur Montage des Trägers an einem feststehenden Teil des Aufzugs, mit einem Schlitten am Träger, mit einem Bandhalter am Schlitten mit 25 mindesten seinem Befestigungselement zur ortsfesten Befestigung des Positionsmessbandes am Schlitten und zur groben Einstellung der Längenposition des Positionsmessbandes, mit einer Führungseinrichtung zwischen Träger und Schlitten mit Führungselementen am Träger und am Schlitten zur in Parallelrichtung des zu montierenden Positionsmessbandes verschiebbaren 30 Befestigung des Schlittens am Träger, mit einer Spanneinrichtung zwischen Träger und Schlitten mit Angriffselementen an Träger und Schlitten und mit einem Spannelement welches an den Angriffselementen befestigt ist um den Schlitten entgegen der Richtung des zu befestigenden Positionsbandes zu bewegen und um ein befestigtes Positionsband spannen zu können, mit einer Detektionseinrichtung 35 zur Detektion einer kritischen Verschiebung des Schlittens auf dem Träger aufgrund einer kritische Längenänderung eines zu montierenden Positionsmessbandes und zur Ausgabe eines Signals bei einer Detektion mit mindestens einem Aktivierungselement zur Kennzeichnung der Position einer kritischen Verschiebung und mit einem Sensor zur Detektion des Aktivierungselementes bei kritischer Verschiebung, wobei das Aktivierungselement und der Sensor wechselseitig auf dem Träger und dem Schlitten befestigt sind, und mit einer Justiereinrichtung um den Abstand zwischen dem mindestens einem Aktivierungselement und dem Sensor einstellen zu können mit mindestens einem Justierelement an Schlitten und Bandhalter zur Einstellung der Position des Bandhalters in Bezug auf den Schlitten in einer Parallelrichtung des zu montierenden Positionsmessbandes um die Längenposition eines zu montierenden Positionsmessbandes in Bezug auf den Schlitten justieren zu können, oder an Träger und Schlitten zur Einstellung des Abstandes zwischen Aktivierungselement und Sensor.

Die Sensorvorrichtung kann den Vorteil ausbilden, dass eine kritische Längenänderung eines montierten Positionsmessbandes detektiert werden kann.

Die erfindungsgemässe Sensorvorrichtung kann dazu vorgesehen sein, am Boden oder in einem unteren Bereich eines Aufzugschachtes befestigt zu werden und ein an der Decke oder einem oberen Bereich des Aufzugschachtes befestigte und nach unten hängende Positionsmessbandes aufzunehmen, zu spannen und eine kritische Längenänderung des Positionsmessbandes zu detektieren.

Das Positionsmessband kann eine Vielzahl von Positionscodes aufweisen. Das Positionsmessband kann dazu vorgesehen sein, die Höhenposition einer Aufzugskabine im Aufzugsschacht zu bestimmen. Dazu kann die Aufzugskabine eine weitere Sensorvorrichtung aufweisen, welche die Positionscodes des Positionsmessbandes detektiert.

Eine Längenänderung des Positionsmessbandes kann durch Temperaturänderung, Alterung oder auch Bruch des Positionsmessbandes verursacht werden. Eine Längenänderung ist kritisch, wenn sie einen bestimmten Schwellenwert überschreitet. Der Schwellenwert kann so gewählt sein, dass eine Längenänderung ohne Überschreitung des Schwellenwertes vom Positionsmesssystem noch ohne Fehler kompensiert und verarbeitet werden kann.

Vorzugsweise umfasst die Detektionseinrichtung ein erstes Aktivierungselement welches die Position des Schlittens bei einer kritischen Dehnung eines zu montierenden Positionsmessbands kennzeichnet und ein zweites Aktivierungselement welches die Position des Schlittens bei einer kritischen Verkürzung eines zu montierenden Positionsmessbands kennzeichnet.

Dies kann den Vorteil ausbilden, dass eine kritische Längenänderung in beide Richtungen detektiert werden kann.

Vorzugsweise weist die Sensorvorrichtung ein Markierungselement an Träger oder Schlitten auf, um den Abstand zwischen dem mindestens einem Aktivierungselement und dem Sensor auf eine bestimmte kritische Distanz einstellen zu können welche einer kritischen Längenänderung eines zu montierenden Positionsmessbandes entspricht und um insbesondere bei zwei Aktivierungselementen den Sensor auf eine mittlere Position zwischen den beiden Aktivierungselementen einstellen zu können.

Dies kann den Vorteil ausbilden, dass die Justierung der Sensorvorrichtung einfach vorgenommen werden kann und insbesondere standardisiert vorgegeben werden kann.

Vorzugsweise bildet die Spanneinrichtung eine erste Einstellungseinrichtung und die Justiereinrichtung eine zweite Einstellungseinrichtung aus, jeweils zur Veränderung der Position des zu montierenden Positionsmessbandes in Bezug auf die Detektionseinrichtung, insbesondere in Bezug auf die Aktivierungselemente oder auf den Sensor.

Dies kann den Vorteil ausbilden, dass die Justierung zuerst in grober Weise und dann ich feinerer Weise vorgenommen werden kann. Dies kann den Prozess der Justierung vereinfachen.

Vorzugsweise sieht die Sensorvorrichtung die Befestigung eines Positionsmessbandes aus Metall, insbesondere ein Stahlband, vor, welches insbesondere eine Abfolge von optischen 2D-Codes aufweist

Vorzugsweise entspricht eine kritische Längenänderung des Positionsmessbandes einer Dehnung oder einer Verkürzung, welche einen bestimmte unterschiedliche Schellenwerte oder einen gemeinsamen Schwellenwert überschreitet.

Vorzugsweise entspricht die Richtung des zu montierenden Positionsmessbandes der Richtung hin zu dessen oberen Ende und die Parallelrichtung des zu montierenden Positionsmessbandes der Parallele in dessen Richtung und dessen entgegen gesetzte Richtung.

Dies kann den Vorteil ausbilden, dass die Sensorvorrichtung dem Positionsmessband optimal angepasst ist.

Vorzugsweise ist das Montageelement des Trägers ein Schraubloch. Vorzugsweise ist der Träger zur Montage am unteren Endes des Aufzugs, insbesondere am Boden des Aufzuges, vorgesehen.

Dies kann den Vorteil ausbilden, dass das Positionsmessband vollständig überwacht wird.

Vorzugsweise sieht das mindestens eine Befestigungselement des Bandhalters zwei Ausnehmungen im Bandhalter zum Einfädeln des Positionsmessbandes vor. Dies kann den Vorteil ausbilden, dass das Positionsmessband einfach am Bandhalter befestigt werden kann.

Vorzugsweise ist das Positionsmessband an seinem unteren Ende zur Befestigung vorgesehen. Dies kann den Vorteil ausbilden, dass das gesamte Positionsmessband überwacht wird.

Vorzugsweise ist der Bandhalter ortsfest am Schlitten befestigt. Dies kann den Vorteil ausbilden, dass eine kritische Längenänderung präzise detektiert werden kann.

Vorzugsweise erfolgt die grobe Einstellung der Längenposition des Positionsmessbandes am Befestigungselement des Bandhalters die Längenposition des Positionsmessbands in Bezug auf Schlitten und Träger in Parallelrichtung des Positionsmessbandes. Dies kann den Vorteil ausbilden, dass schon bei der Befestigung des Positionsmessbandes am Bandhalter eine grobe Justierung vorgenommen werden kann.

Vorzugsweise weisen die Führungselemente der Führungseinrichtung Schlitze und Auflageflächen im Träger und Laschen und Kufen im Schlitten auf, wobei die Laschen zur Führung in die Schlitze eingreifen und die Kufen zur Führung auf den Auflageflächen gleiten.

Dies kann den Vorteil ausbilden, dass der Schlitten in Parallelrichtung des Positionsmessbandes verschiebbar geführt ist.

Vorzugsweise sind die Angriffselemente der Spanneinrichtung Ösen. Vorzugsweise ist das Spannelement der Spanneinrichtung eine Feder welche Hakenelemente aufweist, die in die Angriffselemente der Spanneinrichtung eingehakt sind.

Dies kann den Vorteil ausbilden, dass das Positionsmessband gespannt bleibt und eine Längenänderung des Positionsmessbandes direkt zu einer Bewegung den Schlitten führt.

Vorzugsweise sind die Aktivierungselemente der Detektionseinrichtung Tastelemente, insbesondere Rampenelemente, und der Sensor ein Tastsensor welcher bei kritischer Verschiebung des Schlittens durch die Rampenelemente aktiviert wird. Vorzugsweise wird die kritische Verschiebung des Schlittens durch eine kritische Längenänderung eines zu montierenden des Positionsmessbandes bewirkt.

Dies kann den Vorteil ausbilden, dass die Detektion einer kritischen Längenänderung auf einfache Art erfolgt. Dies kann weiterhin den Vorteil ausbilden, dass das Funktionieren der Sensorvorrichtung durch Sichtprüfung einfach erfolgen kann.

Vorzugsweise weisen die Justierelemente der Justiereinrichtung eine Lochreihe im Bandhalter, zwei Gewindebohrungen im Schlitten und zwei zugeordnete Schrauben auf wobei wahlweise unterschiedliche Löcher der Lochreihe gewählt werden können, um den Bandhalter mittels der Schrauben in den Gewindebohrungen des Schlittens am Schlitten zu befestigen.

Dies kann den Vorteil ausbilden, dass die Befestigung des Positionsmessbandes in gestufter Weise in Bezug auf den Schlitten justiert werden kann. Dies kann den Vorteil ausbilden, dass die Detektionseinrichtung in gestufter Weise justiert werden kann.

Vorzugsweise weist die Sensorvorrichtung ein Schutzelement zur Abschattung in Richtung des zu montierenden Positionsmessband auf, insbesondere einen flächenhaften Vorsprung am in Richtung des zu montierenden Positionsmessbandes liegenden Ende des Trägers, um gegebenenfalls von aus der Richtung vom oberen Ende des Positionsmessbandes einfallende Gegenstände vor deren Einschlag auf den Schlitten abzuweisen.

Dies kann die Betriebssicherheit der Sensoreinrichtung erhöhen.

Der erfindungsgemässe Aufzug ist ein Aufzug mit einer Sensorvorrichtung der vorgenannten Art. Dieser kann die vorgenannten Vorteile ausbilden.

Weitere Merkmale der Erfindung sind in den Zeichnungen angegeben.

Die jeweils genannten Vorteile können sich auch für Merkmalskombinationen realisieren in deren Zusammenhang sie nicht genannt sind.

### Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:
- Fig. 1: die Sensoreinrichtung ins frontaler Seitenansicht
- Fig. 2: die Sensoreinrichtung in perspektivischer Explosionsansicht
- Fig. 3: die Sensoreinrichtung in perspektivischer Seitenansicht von rechts

Alle Figuren zeigen die identisch gleiche Sensoreinrichtung in proportional getreuer Ansicht.

### Detaillierte Beschreibung der Zeichnungen:

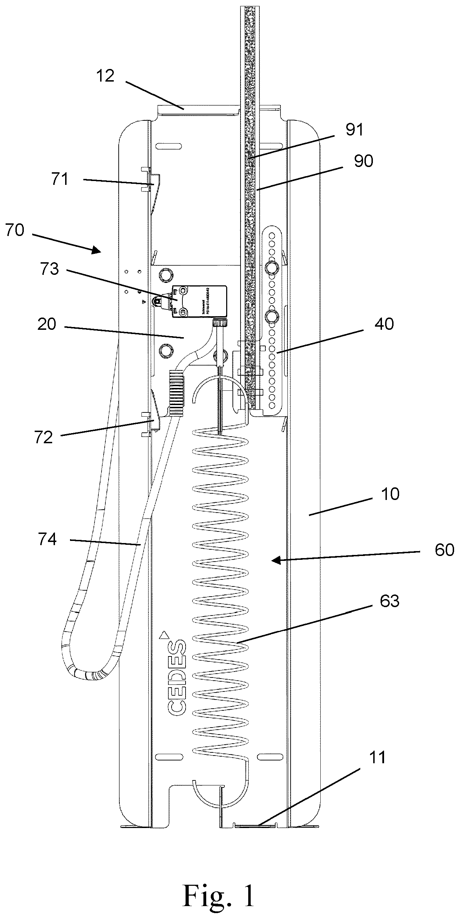

Fig. 1 zeigt den Träger 10, den Schlitten 20, den Bandhalter 30, die Spanneinrichtung 60 mit der Feder 63, die Detektionseinrichtung 70 mit der oberen Rampe 71 und der unteren Rampe 72 am Träger 10, dem Tastsensor 73 am Schlitten 20 und der Signalleitung 74 welche am Tastsensor 73 angeschlossen ist, sowie das Positionsmessband 90 mit einer Vielzahl von 2D-Positionscodes 91.

Die Sensoreinrichtung ist in Verlängerung eines im oberen Ende des Aufzugsschachtes aufgehängten Positionsmessbandes mit dem Schraubloch 11 am Boden des Aufzugsschachtes mittels einer Schraube befestigt. Somit ist die Orientierung der Figuren in Bezug auf oben und unten realistisch. Der Träger 11 weist am oberen Ende ein Abweisblech 12 als Schutzelement gegen herabfallende Gegenstände auf.

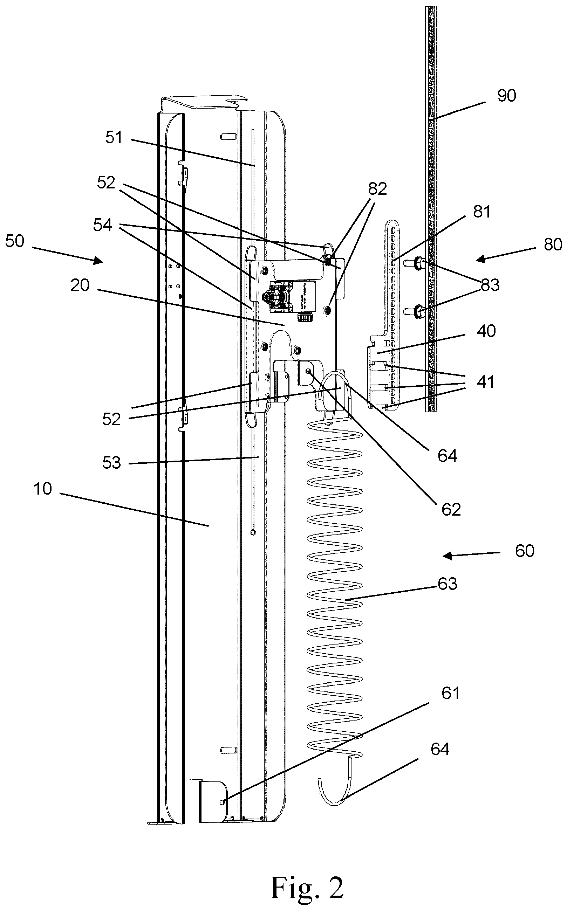

Fig. 2 zeigt in den Einzelteilen den Träger 10, den Schlitten 20, die Feder 63, den Bandhalter 40 mit seinen Ausnehmungen 41 und das Positionsmessband 90.

Die Feder 63 ist im Betrieb mit ihren zwei Hakenelementen 64 in die Öse 61 des Trägers 10 und die Öse 62 des Schlittens 20 eingehakt und zieht so den Schlitten nach unten.

Das Positionsmessband 90 ist im Betrieb so in die Ausnehmungen 41 des Bandhalters 40 eingefädelt, dass es bei Zug kraftschlüssig fest am Bandhalter befestigt ist. Beim Einfädeln des Positionsmessbandes in die Ausnehmungen 41 kann die Position des Positionsmessbandes in Bezug auf den Bandhalter 40 und im Betrieb auch in Bezug auf den Schlitten grob justiert werden.

Die Justiereinrichtung 80 weist am Bandhalter 40 eine Lochreiche 81 auf durch die im Betrieb zwei Schrauben 83 eingeführt werden können, welche in die Schraublöcher 82 des Schlittens 20 eingeschraubt werden. Somit ist im Betrieb das Positionsmessband fest am Schlitten befestigt. Durch die Wahl der verwendeten Löcher der Lochreiche für die Schrauben kann die Position des Positionsmessbandes 90 in Bezug auf den Schlitten fein justiert werden.

Die Führungseinrichtung 50 weist vier Laschen 52 am Schlitten auf, welche in die zwei Schlitze 51 des Träger 10 eingreifen und auch zwei Kufen 54 am Schlitten, welche auf den zwei Auflageflächen 53 des Trägers gleiten. Durch diese Elemente ist der Schlitten formschlüssig in Parallelrichtung des zu montierenden Positionsmessbandes eindimensional verschiebbar geführt. Somit kann der Schlitten bei einer Längenänderung des Positionsmessbandes durch Verschiebung seiner Position im Träger mit dem Ende des Positionsmessbandes mitfahren.

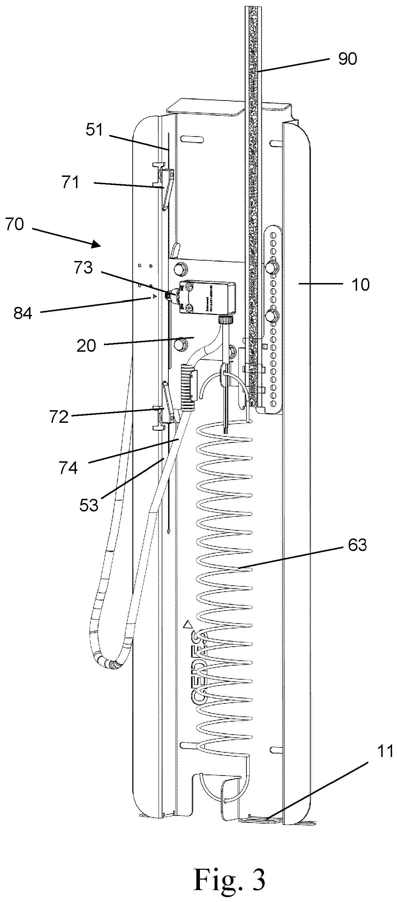

Fig. 3. Die Detektionseinrichtung 70 weist einen fest am Schlitten 20 befestigten Tastsensor 73 auf sowie die obere 71 und untere 72 Rampe am Träger 10. Der Tastsensor ist über die Signalleitung 74 mit der Aufzugssteuerung verbunden.

Die Figur zeigt eine obere Rampe 71 und die untere Rampe 72 den Tastsensor 73, sowie das Markierungselement 84 am Träger. Das Markierungselement 84 ist so angebracht, dass bei einer Justierung der Sensoreinrichtung in einer Weise, dass der Tastsensor dem Markierungselement genau gegenübersteht, die beiden Distanzen des Tastsensors zu oberen und zum unteren Tastelement gleich lang sind. Diese Distanzen repräsentieren die Länge der erlaubten kritischen Längenänderung des Positionsmessbandes.

Die Justierung erfolgt in der Weise, dass die Position des Schlittens in Bezug auf das herunterhängende Ende des Positionsmessbandes mit Hilfe der Justiereinrichtung so gewählt wird, dass der Sensor auf der Höhe der Markierung positioniert ist. Somit ist die Sensorvorrichtung so eingerichtet, dass sowohl für eine Dehnung wie auch für eine Verkürzung des Positionsmessbandes die gleichen kritischen Distanzen detektiert werden. Dies ist der anfängliche Betriebszustand der Sensorvorrichtung wie in Figur 1 und Figur 3 abgebildet.

Verkürzt sich nun das Positionsmessband 90 um mehr als eine kritische Längenänderung so zieht das Positionsmessband gegen die Kraft der Feder 63 den Schlitten 20 samt dem Tastsensor 73 nach oben bis zur oberen Rampe 71, sodass die obere Rampe 71 den Tastfinger des Tastsensors 73 eindrückt. Dabei sendet der Tastsensor 73 über die Signalleitung 74 ein Signal an die an die Signalleitung anzuschliessende Aufzugssteuerung und diese kann etwa einen Not-Halt des Aufzuges einleiten.

Dehnt sich nach dem anfänglichen Betriebszustand der Sensorvorrichtung das Positionsmessband nun um mehr als eine kritische Längenänderung, so zieht die Feder 63 den Schlitten 20 samt dem Tastsensor 73 nach unten bis zur unteren Rampe 72, sodass die untere Rampe 72 den Tastsensor 73 eindrückt. Dabei sendet der Tastsensor 73 über die Signalleitung 74 ein Signal an die an die Signalleitung anzuschliessende Aufzugssteuerung und diese kann etwa einen Not-Halt des Aufzuges einleiten.

### Bezugszeichenliste:

- 10: Träger
- 11: Schraubloch
- 12: Abweisblech

- 20: Schlitten

- 40: Bandhalter
- 41: Ausnehmungen

- 50: Führungseinrichtung
- 51: Schlitze
- 52: Laschen
- 53: Auflagefläche
- 54: Kufen

- 60: Spanneinrichtung
- 61: Öse
- 62: Öse
- 63: Feder
- 64: Hakenelement

- 70: Detektionseinrichtung
- 71: obere Rampe
- 72: untere Rampe
- 73: Tastsensor
- 74: Signalleitung

- 80: Justiereinrichtung
- 81: Lochreihe
- 82: Schraublöcher
- 83: Schrauben
- 84: Markierungselement

- 90: Positionsmessband
- 91: 2D-Positionscodes

## Patentansprüche

1. Sensorvorrichtung
- für einen Aufzug mit einem hängenden Positionsmessband (90)
- zur Detektion einer kritischen Längenänderung des Positionsmessbandes (90)
- mit einem Träger (10)
- mit einem Montageelement
- zur Montage des Trägers (10) an einem feststehenden Teil des Aufzugs,
- mit einem Schlitten (20)
- am Träger (10),
- mit einem Bandhalter (8)
- am Schlitten (20)
- mit mindestens einem Befestigungselement
- zur ortsfesten Befestigung des Positionsmessbandes (90) und
- zur groben Einstellung der Längenposition des Positionsmessbandes (90),
- mit einer Führungseinrichtung (50)
- zwischen Träger (10) und Schlitten (20)
- mit Führungselementen am Träger (10) und am Schlitten (20)
- zur in Parallelrichtung des zu montierenden Positionsmessbandes (90)
- verschiebbaren Befestigung des Schlittens (20) am Träger (10),
- mit einer Spanneinrichtung (60)
- zwischen Träger (10) und Schlitten (20)
- mit Angriffselementen an Träger (10) und Schlitten (20) und
- mit einem Spannelement,
- welches an den Angriffselementen befestigt ist,
- um den Schlitten (20) entgegen der Richtung des zu befestigenden Positionsbandes zu bewegen und,
- um ein befestigtes Positionsband spannen zu können,
- mit einer Detektionseinrichtung (70)
- zur Detektion einer kritischen Verschiebung des Schlittens (20) auf dem Träger (10) aufgrund einer kritische Längenänderung eines zu montierenden Positionsmessbandes (90) und zur Ausgabe eines Signals bei einer Detektion
- mit mindestens einem Aktivierungselement
- zur Kennzeichnung der Position einer kritischen Verschiebung und
- mit einem Sensor
- zur Detektion des Aktivierungselementes bei kritischer Verschiebung,
- wobei das Aktivierungselement und der Sensor
- wechselseitig auf dem Träger (10) und dem Schlitten (20) befestigt sind,
**dadurch gekennzeichnet, dass**
- eine Justiereinrichtung (80) vorgesehen ist,
- um den Abstand zwischen dem mindestens einem Aktivierungselement und dem Sensor einstellen zu können
- mit mindestens einem Justierelement
- an Schlitten (20) und Bandhalter (8)
- zur Einstellung der Position des Bandhalters (8) in Bezug auf den Schlitten (20) in einer Parallelrichtung des zu montierenden Positionsmessbandes (90)
- um die Längenposition eines zu montierenden Positionsmessbandes (90) in Bezug auf den Schlitten (20) justieren zu können,
- oder an Träger (10) und Schlitten (20)
- zur Einstellung des Abstandes zwischen dem mindestens einen Aktivierungselement und dem Sensor.

2. Sensorvorrichtung nach Anspruch 1, **dadurch gekennzeichnet, dass**
- die Detektionseinrichtung (70)
- ein erstes Aktivierungselement umfasst,
- welches die Position des Schlittens (20) bei einer kritischen Dehnung eines zu montierenden Positionsmessbands (90) kennzeichnet und
- ein zweites Aktivierungselement umfasst,
- welches die Position des Schlittens (20) bei einer kritischen Verkürzung eines zu montierenden Positionsmessbands (90) kennzeichnet.

3. Sensorvorrichtung nach einem der vorhergehenden Ansprüche, mit
- einem Markierungselement (84)
- an Träger (10) oder Schlitten (20)
- um den Abstand zwischen dem mindestens einem Aktivierungselement und dem Sensor auf eine bestimmte kritische Distanz einstellen zu können welche einer kritischen Längenänderung eines zu montierenden Positionsmessbandes (90) entspricht
- und um insbesondere bei zwei Aktivierungselementen den Sensor auf eine mittlere Position zwischen den beiden Aktivierungselementen einstellen zu können.

4. Sensorvorrichtung nach einem der vorhergehenden Ansprüche, **dadurch gekennzeichnet, dass**
- die Spanneinrichtung (60) eine erste Einstellungseinrichtung und
- die Justiereinrichtung (80) eine zweite Einstellungseinrichtung ausbilden
- jeweils zur Veränderung der Position des zu montierenden Positionsmessbandes (90) in Bezug auf die Detektionseinrichtung (70), insbesondere in Bezug auf die Aktivierungselemente oder auf den Sensor.

5. Sensorvorrichtung nach einem der vorhergehenden Ansprüche, **dadurch gekennzeichnet, dass**
- die Sensorvorrichtung die Befestigung eines Positionsmessbandes (90) aus Metall, insbesondere ein Stahlband vorsieht, welches insbesondere eine Abfolge von optischen 2D Codes (91) aufweist und/oder
- eine kritische Längenänderung des Positionsmessbandes (90) einer Dehnung oder einer Verkürzung entspricht, welche einen bestimmte unterschiedliche Schwellenwerte oder einen gemeinsamen Schwellenwert überschreitet und/oder
- die Richtung des zu montierenden Positionsmessbandes (90) die Richtung hin zu dessen oberen Ende ist und die Parallelrichtung des zu montierenden Positionsmessbandes (90) die Parallele in dessen Richtung und dessen entgegengesetzte Richtung ist.

6. Sensorvorrichtung nach einem der vorhergehenden Ansprüche, **dadurch gekennzeichnet, dass**
- das Montageelement des Trägers (10) ein Schraubloch (11) ist und/oder
- der Träger (10) zum Montage am unteren Endes des Aufzugs, insbesondere am Boden des Aufzuges vorgesehen ist.

7. Sensorvorrichtung nach einem der vorhergehenden Ansprüche, **dadurch gekennzeichnet, dass**
- das mindestens eine Befestigungselement des Bandhalters (8) zwei Ausnehmungen (41) zum Einfädeln des Positionsmessbandes (90) vorsieht und/oder
- das Positionsmessband (90) an seinem unteren Ende zur Befestigung vorgesehen ist und/oder
- der Bandhalter (8) ortsfest am Schlitten (20) befestigt ist und/oder
- die grobe Einstellung der Längenposition des Positionsmessbandes (90) am Befestigungselement des Bandhalters (8) die Längenposition des Positionsmessbands (90) in Bezug auf Schlitten (20) und Träger (10) in Parallelrichtung des Positionsmessbandes (90) erfolgt.

8. Sensorvorrichtung nach einem der vorhergehenden Ansprüche, **dadurch gekennzeichnet, dass**
- die Führungselemente der Führungseinrichtung (50) Schlitze (51) und Auflageflächen (53) im Träger (10) und Laschen (52) und Kufen (54) im Schlitten (20) aufweisen, wobei die Laschen zur Führung in die Schlitze (51) eingreifen und die Kufen (54) zur Führung auf den Auflageflächen (53) gleiten.

9. Sensorvorrichtung nach einem der vorhergehenden Ansprüche, **dadurch gekennzeichnet, dass**
- die Angriffselemente der Spanneinrichtung (60) Ösen sind und/oder
- das Spannelement der Spanneinrichtung (60) eine Feder (63) ist, welche Hakenelemente (64) aufweist, die in die Angriffselemente der Spanneinrichtung (60) eingehakt sind.

10. Sensorvorrichtung nach einem der vorhergehenden Ansprüche, **dadurch gekennzeichnet, dass**
- die Aktivierungselemente der Detektionseinrichtung (70) Tastelemente, insbesondere Rampenelemente sind und der Sensor ein Tastsensor (73) ist, welcher bei kritischer Verschiebung des Schlittens (20) durch die Rampenelemente aktiviert wird und/oder
- die kritische Verschiebung des Schlittens (20) durch eine kritische Längenänderung eines zu montierenden des Positionsmessbandes (90) bewirkt wird.

11. Sensorvorrichtung nach einem der vorhergehenden Ansprüche, **dadurch gekennzeichnet, dass**
- die Justierelemente der Justiereinrichtung (80) eine Lochreihe (81) im Bandhalter (8), zwei Gewindebohrungen im Schlitten (20) und zwei zugeordnete Schrauben aufweisen, wobei wahlweise unterschiedliche Löcher der Lochreihe (81) gewählt werden können, um den Bandhalter (8) mittels der Schrauben in den Gewindebohrungen des Schlittens (20) am Schlitten (20) zu befestigen.

12. Sensorvorrichtung nach einem der vorhergehenden Ansprüche, **dadurch gekennzeichnet, dass**
- die Sensorvorrichtung ein Schutzelement zur Abschattung in Richtung des zu montierenden Positionsmessband (90) aufweist,
- insbesondere einen flächenhaften Vorsprung am in Richtung des zu montierenden Positionsmessbandes (90) liegenden Ende des Trägers (10),
- um gegebenenfalls von aus der Richtung vom oberen Ende des Positionsmessbandes (90) einfallende Gegenstände vor deren Einschlag auf den Schlitten (20) abzuweisen.

13. Aufzug mit einer Sensorvorrichtung nach einem der vorgenannten Ansprüche,

## Claims

1. Sensor apparatus
- for an elevator with a hanging position measuring tape (90)
- for detecting a critical change in length of the position measuring tape (90)
- comprising a carrier (10)
- with a mounting element
- for mounting the carrier (10) on a stationary part of the elevator,
- comprising a carriage (20)
- on the carrier (10),
- comprising a tape holder (8)
- on the carriage (20)
- with at least one securing element
- for securing the position measuring tape (90) in a fixed location and
- for roughly setting the length position of the position measuring tape (90),
- comprising a guide device (50)
- between the carrier (10) and the carriage (20)
- with guide elements on the carrier (10) and on the carriage (20)
- for, in the parallel direction of the position measuring tape (90) to be mounted,
- displaceably securing the carriage (20) to the carrier (10),
- comprising a tensioning device (60)
- between the carrier (10) and the carriage (20)
- with engagement elements on the carrier (10) and the carriage (20) and
- with a tensioning element
- which is secured to the engagement elements
- in order to move the carriage (20) counter to the direction of the positioning tape to be secured and
- in order to be able to tension a secured positioning tape,
- comprising a detection device (70)
- for detecting a critical displacement of the carriage (20) on the carrier (10) on the basis of a critical change in length of a position measuring tape (90) to be mounted and for outputting a signal in the event of a detection,
- with at least one activation element
- for identifying the position of a critical displacement and
- with a sensor
- for detecting the activation element in the event of a critical displacement,
- wherein the activation element and the sensor
- are alternately secured on the carrier (10) and the carriage (20),
**characterized in that**
- an adjusting device (80) is provided
- in order to be able to set the distance between the at least one activation element and the sensor,
- with at least one adjusting element
- on the carriage (20) and the tape holder (8)
- for setting the position of the tape holder (8) with respect to the carriage (20) in a parallel direction of the position measuring tape (90) to be mounted
- in order to be able to adjust the length position of a position measuring tape (90) to be mounted with respect to the carriage (20),
- or on the carrier (10) and the carriage (20)
- for setting the distance between the at least one activation element and the sensor.

2. Sensor apparatus according to Claim 1, **characterized in that**
- the detection device (70)
- comprises a first activation element
- which identifies the position of the carriage (20) in the event of a critical extension of a position measuring tape (90) to be mounted and
- comprises a second activation element
- which identifies the position of the carriage (20) in the event of a critical shortening of a position measuring tape (90) to be mounted.

3. Sensor apparatus according to either of the preceding claims, comprising
- a marking element (84)
- on the carrier (10) or carriage (20)
- in order to be able to set the distance between the at least one activation element and the sensor to a specific critical distance which corresponds to a critical change in length of a position measuring tape (90) to be measured
- and, in particular in the case of two activation elements, in order to be able to set the sensor to a central position between the two activation elements.

4. Sensor apparatus according to one of the preceding claims, **characterized in that**
- the tensioning device (60) forms a first setting device and
- the adjusting device (80) forms a second setting device,
- in each case for changing the position of the position measuring tape (90) to be mounted with respect to the detection device (70), in particular with respect to the activation elements or to the sensor.

5. Sensor apparatus according to one of the preceding claims, **characterized in that**
- the sensor apparatus provides the securing of a position measuring tape (90) composed of metal, in particular a steel tape, which has in particular a sequence of optical 2D codes (91) and/or
- a critical change in length of the position measuring tape (90) corresponds to an extension or a shortening which exceeds a specific different threshold values or a common threshold value and/or
- the direction of the position measuring tape (90) to be mounted is the direction toward its upper end and the parallel direction of the position measuring tape (90) to be mounted is the parallel in its direction and its opposite direction.

6. Sensor apparatus according to one of the preceding claims, **characterized in that**
- the mounting element of the carrier (10) is a screw hole (11) and/or
- the carrier (10) is intended for mounting on the lower end of the elevator, in particular on the floor of the elevator.

7. Sensor apparatus according to one of the preceding claims, **characterized in that**
- the at least one securing element of the tape holder (8) provides two recesses (41) for threading in the position measuring tape (90) and/or
- the position measuring tape (90) is intended for securing at its lower end and/or
- the tape holder (8) is secured to the carriage (20) in a fixed location and/or
- the rough setting of the length position of the position measuring tape (90) on the securing element of the tape holder (8) the length position of the position measuring tape (90) with respect to the carriage (20) and the carrier (10) is made in the parallel direction of the position measuring tape (90).

8. Sensor apparatus according to one of the preceding claims, **characterized in that**
- the guide elements of the guide device (50) have slots (51) and support areas (53) in the carrier (10) and lugs (52) and runners (54) in the carriage (20), wherein the lugs engage into the slots (51) for guiding purposes and the runners (54) slide on the support areas (53) for guiding purposes.

9. Sensor apparatus according to one of the preceding claims, **characterized in that**
- the engagement elements of the tensioning device (60) are eyes and/or
- the tensioning element of the tensioning device (60) is a spring (63) which has hook elements (64) which are hooked into the engagement elements of the tensioning device (60).

10. Sensor apparatus according to one of the preceding claims, **characterized in that**
- the activation elements of the detection device (70) are button elements, in particular ramp elements, and the sensor is a tactile sensor (73) which is activated by the ramp elements in the event of a critical displacement of the carriage (20) and/or
- the critical displacement of the carriage (20) is effected by a critical change in length of a the position measuring tape (90) to be mounted.

11. Sensor apparatus according to one of the preceding claims, **characterized in that**
- the adjusting elements of the adjusting device (80) have a row of holes (81) in the tape holder (8), two threaded bores in the carriage (20) and two associated screws, wherein different holes of the row of holes (81) can be selectively chosen in order to secure the tape holder (8) to the carriage (20) by means of the screws in the threaded bores of the carriage (20).

12. Sensor apparatus according to one of the preceding claims, **characterized in that**
- the sensor apparatus has a protective element for providing screening in the direction of the position measuring tape (90) to be mounted,
- in particular an extensive projection at that end of the carrier (10) that is situated in the direction of the position measuring tape (90) to be mounted,
- in order to divert away objects which may fall in from the direction of the upper end of the position measuring tape (90) before they hit the carriage (20).

13. Elevator comprising a sensor apparatus according to one of the preceding claims.

## Revendications

1. Dispositif capteur
- pour un ascenseur avec une bande de mesure de position suspendue (90)
- pour la détection d'une variation de longueur critique de la bande de mesure de position (90)
- avec un support (10)
- avec un élément de montage
- pour le montage du support (10) sur une partie fixe de l'ascenseur,
- avec un chariot (20)
- sur le support (10),
- avec un porte-bande (8)
- sur le chariot (20)
- avec au moins un élément de fixation
- pour la fixation fixe de la bande de mesure de position (90) et
- pour le réglage approximatif de la position longitudinale de la bande de mesure de position (90),
- avec un appareil de guidage (50)
- entre le support (10) et le chariot (20)
- avec des éléments de guidage sur le support (10) et sur le chariot (20)
- pour la fixation mobile du chariot (20) sur le support (10)
- dans la direction parallèle de la bande de mesure de position (90) à monter,
- avec un appareil de serrage (60)
- entre le support (10) et le chariot (20)
- avec des éléments de prise sur le support (10) et le chariot (20) et
- avec un élément de serrage,
- qui est fixé aux éléments de prise,
- afin de déplacer le chariot (20) à l'encontre de la direction de la bande de position à fixer et,
- afin de pouvoir serrer une bande de position fixée,
- avec un appareil de détection (70)
- pour la détection d'un déplacement critique du chariot (20) sur le support (10) en raison d'une variation de longueur critique d'une bande de mesure de position (90) à monter et pour l'émission d'un signal lors d'une détection
- avec au moins un élément d'activation
- pour la caractérisation de la position d'un déplacement critique et
- avec un capteur
- pour la détection de l'élément d'activation lors d'un déplacement critique,
- l'élément d'activation et le capteur
- étant fixés sur des côtés opposés sur le support (10) et le chariot (20),
**caractérisé en ce que**
- un dispositif d'ajustement (80) est prévu,
- afin de pouvoir régler la distance entre l'au moins un élément d'activation et le capteur
- avec au moins un élément d'ajustement
- sur le chariot (20) et le porte-bande (8)
- pour l'ajustement de la position du porte-bande (8) par rapport au chariot (20) dans une direction parallèle à la bande de mesure de position (90) à monter,
- afin de pouvoir ajuster la position longitudinale d'une bande de mesure de position (90) à monter par rapport au chariot (20),
- ou sur le support (10) et le chariot (20)
- pour le réglage de la distance entre l'au moins un élément d'activation et le capteur.

2. Dispositif capteur selon la revendication 1, **caractérisé en ce que**
- l'appareil de détection (70)
- comprend un premier élément d'activation
- qui caractérise la position du chariot (20) lors d'un allongement critique d'une bande de mesure de position (90) à monter et
- comprend un deuxième élément d'activation
- qui caractérise la position du chariot (20) lors d'un raccourcissement critique d'une bande de mesure de position (90) à monter.

3. Dispositif capteur selon l'une quelconque des revendications précédentes, avec
- un élément de marquage (84)
- sur le support (10) ou le chariot (20)
- afin de pouvoir régler la distance entre l'au moins un élément d'activation et le capteur à une distance critique déterminée qui correspond à une variation de longueur critique d'une bande de mesure de position (90) à monter
- et, notamment dans le cas de deux éléments d'activation, afin de pouvoir régler le capteur à une position médiane entre les deux éléments d'activation.

4. Dispositif capteur selon l'une quelconque des revendications précédentes, **caractérisé en ce que**
- l'appareil de serrage (60) forme un premier appareil de réglage et
- l'appareil d'ajustement (80) forme un deuxième appareil de réglage
- respectivement pour la variation de la position de la bande de mesure de position (90) à monter par rapport à l'appareil de détection (70), notamment par rapport aux éléments d'activation ou au capteur.

5. Dispositif capteur selon l'une quelconque des revendications précédentes, **caractérisé en ce que**
- le dispositif capteur prévoit la fixation d'une bande de mesure de position (90) en métal, notamment une bande en acier, qui présente notamment une succession de codes optiques 2D (91) et/ou
- une variation de longueur critique de la bande de mesure de position (90) correspond à un allongement ou à un raccourcissement qui dépasse une valeurs seuil différente déterminée ou une valeur seuil commune et/ou
- la direction de la bande de mesure de position (90) à monter est la direction vers son extrémité supérieure et la direction parallèle de la bande de mesure de position (90) à monter est la parallèle dans sa direction et sa direction opposée.

6. Dispositif capteur selon l'une quelconque des revendications précédentes, **caractérisé en ce que**
- l'élément de montage du support (10) est un trou de vis (11) et/ou
- le support (10) est prévu pour le montage à l'extrémité inférieure de l'ascenseur, notamment au fond de l'ascenseur.

7. Dispositif capteur selon l'une quelconque des revendications précédentes, **caractérisé en ce que**
- l'au moins un élément de fixation du porte-bande (8) prévoit deux évidements (41) pour l'enfilage de la bande de mesure de position (90) et/ou
- la bande de mesure de position (90) est prévue à son extrémité inférieure pour la fixation et/ou
- le porte-bande (8) est fixé de manière fixe au chariot (20) et/ou
- le réglage approximatif de la position longitudinale de la bande de mesure de position (90) sur l'élément de fixation du porte-bande (8) la position longitudinale de la bande de mesure de position (90) par rapport au chariot (20) et au support (10) s'effectue dans la direction parallèle de la bande de mesure de position (90).

8. Dispositif capteur selon l'une quelconque des revendications précédentes, **caractérisé en ce que**
- les éléments de guidage de l'appareil de guidage (50) présentent des fentes (51) et des surfaces d'appui (53) dans le support (10) et des pattes (52) et des patins (54) dans le chariot (20), les pattes s'engageant dans les fentes (51) pour le guidage et les patins (54) glissant sur les surfaces d'appui (53) pour le guidage.

9. Dispositif capteur selon l'une quelconque des revendications précédentes, **caractérisé en ce que**
- les éléments de prise de l'appareil de serrage (60) sont des œillets et/ou
- l'élément de serrage de l'appareil de serrage (60) est un ressort (63) qui présente des éléments de crochet (64) qui sont accrochés dans les éléments de prise de l'appareil de serrage (60).

10. Dispositif capteur selon l'une quelconque des revendications précédentes, **caractérisé en ce que**
- les éléments d'activation de l'appareil de détection (70) sont des éléments tactiles, notamment des éléments à rampe, et le capteur est un capteur tactile (73) qui est activé par les éléments à rampe lors d'un déplacement critique du chariot (20) et/ou
- le déplacement critique du chariot (20) est provoqué par une variation de longueur critique d'une la bande de mesure de position (90) à monter.

11. Dispositif capteur selon l'une quelconque des revendications précédentes, **caractérisé en ce que**
- les éléments d'ajustement de l'appareil d'ajustement (80) présentent une rangée de trous (81) dans le porte-bande (8), deux alésages taraudés dans le chariot (20) et deux vis associées, des trous différents de la rangée de trous (81) pouvant être sélectionnés au choix afin de fixer le porte-bande (8) au chariot (20) au moyen des vis dans les alésages taraudés du chariot (20) .

12. Dispositif capteur selon l'une quelconque des revendications précédentes, **caractérisé en ce que**
- le dispositif capteur présente un élément de protection pour faire de l'ombre en direction de la bande de mesure de position (90) à monter,
- notamment une saillie en forme de plaque à l'extrémité du support (10) située en direction de la bande de mesure de position (90) à monter,
- afin d'écarter éventuellement des objets venant de la direction de l'extrémité supérieure de la bande de mesure de position (90) avant leur impact sur le chariot (20) .

13. Ascenseur avec un dispositif capteur selon l'une quelconque des revendications précédentes.
